# EUROPEAN PATENT APPLICATION

(11) **EP 2 692 217 A1**
(43) Date of publication of application: **05.02.2014**
(21) Application number: 13460051.9
(22) Date of filing: 29.07.2013
(51) Int. Cl.: A01B 1/02

(54) **A shovel for burying faeces, especially from animals (called a portable cat and dog service)**

(30) Priority: 30.07.2012 PL 12123512
(71) Applicant: Szramke, Kazimierz, 85-166 Bydgoszcz (PL)
(72) Inventor: Szramke, Kazimierz, 85-166 Bydgoszcz (PL)
(74) Representative: Czub, Krzysztof

(57) **Abstract**

The shovel for burying faeces, especially from animals is distinguished by the scoop (3) with rounded cuts (4) on either side and by the handle (2) connected with the scoop (3) by means of a bolt or press stud in a drilled hole (5) at the point of connection between the scoop (3) with the handle (2) at one end and with the grip (1) at the other.

## Description

The object of the invention is a shovel mainly used for the disposal of animal faeces by burying them at the place at which the animal has defecated.

Many kinds of shovels are known, which differ between themselves in the manufacturing technology, appearance of various elements, and with application. The shovel made as per the invention has a scoop with cuts (dents, grooves) at the inner side, in the central part of the scoop and at its lower end (towards the blade), so the shovel may be inserted into the grass or gravel easily without the use of a big force. Owing to that, the shovel may be used even by children under adult supervision. The handle advantageously is connected with the scoop or with the grip by means of a hole, into which a fixing element is inserted. We cut the turf (grass) or dig a small hole with a shovel and place faeces in that hole (after the pet has defecated). Then we backfill and compact the hole with the same shovel.

Animal faeces are a problem faced by almost every municipality, county or province. Even though dog and cat owners are obliged to clean up faeces after their pets, those owners do not do it at all or do it only to a very limited degree. Currently available solutions aiming at the removal and disposal of animal faeces by means of bags, garbage bins or hovers, do not solve the problem. Owing to faeces burying by means of a shovel supplied in a handy and aesthetic bag, we leave the place clean and free from animal faeces.

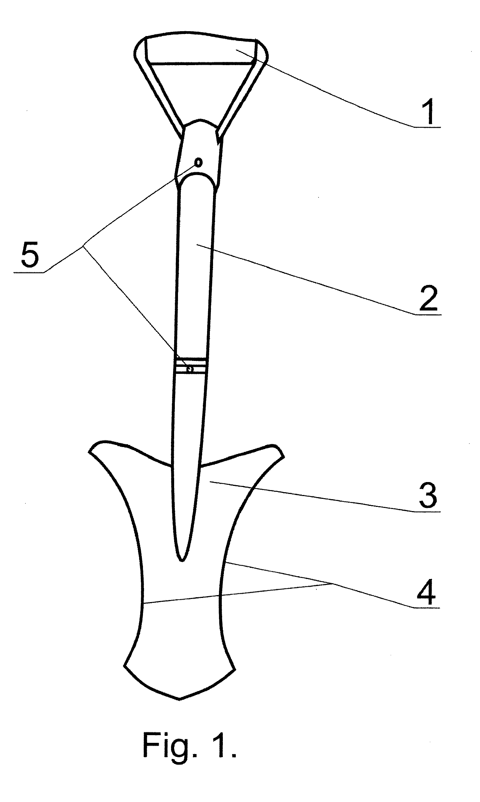

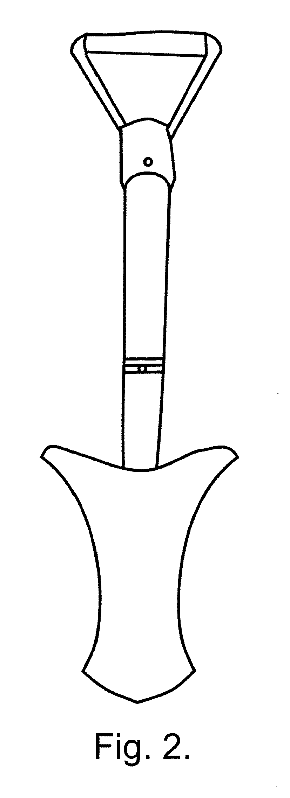

The invention in question was shown on the attached figures, where Fig. 1 shows the shovel ready for use when seen from the front, and Fig. 2 presents the shovel seen from the back.

The shovel consisting of three main parts: the grip (1), the handle (2) and the heart-shaped scoop (3). The grip is made of wood or plastic (a cast). The handle is made of one piece of wood with a round cross section and with ends fitting the scoop (3) and grip (1). The handle (2) is connected with the scoop (3) and grip (1) by means of bolts or press studs fitted in holes (5) for the structure to make a uniform whole. The scoop (3) has rounded cuts (4) in its inner and lower parts, which permit easy driving the shovel into the soil or gravel.

## Claims

1. The shovel for burying faeces, especially from animals, has a scoop and handle connecting the scoop with the grip, **characterised in that** the shovel is distinguished by the scoop (3) having rounded cuts (4) on either side.

2. The shovel, according to the claim 1, **characterised in that** the handle (2) is connected with the scoop (3) by means of a hole (5), into which a fixing element is inserted.

3. The shovel, according to the claim 1 or 2, **characterised in that** the handle (2) is connected with the grip (1) by means of a hole (5), into which a fixing element is inserted.
